# EUROPEAN PATENT APPLICATION

(11) **EP 4 535 251 A1**
(43) Date of publication of application: **09.04.2025**
(21) Application number: 22944076.3
(22) Date of filing: 31.05.2022
(51) Int. Cl.: G06Q 10/00, G05B 23/02, G01M 13/028, G01H 1/00

(54) **METHOD AND SYSTEM FOR GENERATING AN INCREASED REALITY REPRESENTATION OF VIBRATIONAL DEFORMATIONS FOR A STRUCTURE**

(71) Applicant: Weg Equipamentos Electricos S.A., 89256-900 Jaraguá do Sul (BR)
(72) Inventor: SELL GONÇALVES, Vinicius, Jaragua do Sul (BR); PINTER MACIEL, Marcus Vinicius, Jaragua do Sul (BR); DOS SANTOS TAVARES, Lucas Henrique, Jaragua do Sul (BR); CAVALARI LABIGALINI, Luan, Londrina (BR); ANTUNES CEZARIO, Cassiano, Jaragua do Sul (BR)
(74) Representative: Plasseraud IP
(86) International application number: PCT/BR2022/050189
(87) International publication number: WO 2023/230678

(57) **Abstract**

The present invention relates to a method for generating an increased reality representation of vibrational deformations for a structure, using the location of at least two vibration sensor elements in the structure to generate a reference graphic virtual representation and vibration data from the sensor elements to animate the reference graphic virtual representation. The animated graphic virtual representation generated is superimposed on a captured image of the structure, generating a combined image that allows perceiving the vibrational deformations undergone by the structure.

## Description

### FIELD OF THE INVENTION

The present invention refers to a method for generating an augmented reality representation of vibrational deformations of a structure, such as a piece of equipment or set of equipment that vibrates during its operation.

### BACKGROUND OF THE INVENTION

Augmented reality (AR) is a technology that makes it possible to represent images or virtual graphic objects over an image captured in a real environment. This technology has applications in various technological fields.

In medicine, for example, this technology is used in the training of doctors, who can analyze and interact with virtual objects in a real environment. In marketing, augmented reality allows the consumer to experience the product campaign in three dimensions. In retail, AR allows the consumer to visualize a virtual representation of a consumer good in its place of use, whether it is an environment in their home or an area of their own body.

Document US 7,787,992 shows an example of using augmented reality in an industrial process. In the solution described in this document, specific virtual graphics associated with a piece of equipment or device and stored in the system are combined, after recognition by means of an identification system, with the equipment or device associated with them, so that a real image of the object and the stored virtual image associated with the object can be combined and later displayed. The proposed system is used to generate a human-machine interface for monitoring or controlling the device and equipment.

Another example of an augmented reality solution applied to the industrial field is described in document DE10120574. This document shows a system and method for information representation, in which the system comprises a context browser that allows access to an extensive database. Thus, according to a spatial context and using an AR system, the system provides a user interface with context-relevant information and functions.

The well-known solutions for applying AR to the industrial field tend to have a lot of complexity, requiring high computational cost and/or the use of large databases.

### OBJECTIVES OF THE INVENTION

The present invention proposes a method for generating an augmented reality representation of vibrational deformations of a structure, whose technical solution involved is of lower complexity and cost when compared to the known solutions of the state of the art.

It is another objective of the present invention to provide a method for generating an augmented reality representation of vibrational deformations of a structure that allows the user to visually perceive the characteristics of the vibratory deformations experienced by the structure.

It is yet another objective of the present invention to provide a method for generating an augmented reality representation of vibrational deformations of a structure that does not require the creation of three-dimensional representations of the structure to be analyzed.

It is yet another objective of the present invention to provide a method for generating an augmented reality representation of vibrational deformations of a structure that does not require altering the pixels of an image captured of the structure.

It is yet another objective of the present invention to provide a method for generating an augmented reality representation of vibrational deformations of a structure that does not require prior knowledge of the users about programming and/or the physical principles of vibrations.

It is another objective of the present invention to provide a method for generating an augmented reality representation of vibrational deformations of a structure that allows analysis during the usual operation of the structure's equipment, without requiring the generation of forced impacts on the structure.

### BRIEF DESCRIPTION OF THE INVENTION

The present invention achieves these and other objectives by means of a method for generating an augmented reality representation of vibrational deformations for a structure, which comprises:
arranging at least two vibration sensor elements in different locations of the structure;
capturing an image of the structure, before or after the step of arranging the at least two vibration sensor elements;
indicating, in the captured image, the locations of the at least two vibration sensor elements;
generating a reference graphic virtual representation from the locations indicated for the at least two vibration sensor elements;
performing at least two vibration measurements by the vibration sensors;
animating the reference graphic virtual representation to reflect the vibration measurements taken, generating an animated graphic virtual representation;
superimposing the animated graphic virtual representation on the captured image of the structure, generating a combined image; and
displaying the combined image.

In an embodiment of the present invention, the captured image is a static image of the structure, such as a photograph or a single frame of a video image. In alternative embodiments of the present invention, the captured image is a video image of the structure.

The reference graphic representation is preferably a 2D representation, the generation of which requires low computational processing power.

In an embodiment of the present invention, the step of indicating, in the captured image, the locations of at least two vibration sensor elements is carried out in an interface device with a screen.

The vibration sensor elements used by the present invention preferably comprise vibration sensors that perform the measurement by means of the variation of electric voltage proportional to the vibration, and the step of animating the graphic virtual representation is carried out based on the variation of electric voltage measured by the at least two vibration sensors.

The present invention further contemplates an augmented reality representation of vibrational deformations for a structure, comprising:
at least two vibration sensor elements arranged in different locations of the structure;
an image capture device to capture an image of the structure;
a user interface that receives indications of the locations of the at least two vibration sensor elements;
processing means to receive both the data measured by the vibration sensor elements as the indications of their locations in the image, as well as to create a reference graphic virtual representation from these received data;
wherein the processing means generates an animated graphic virtual representation that reflects the vibration measurements performed by the vibration sensor elements and superimposes the animated graphic virtual representation on the captured image of the structure to create a combined image; and
a display device to display the combined image.

The processing means is preferably, but not limited to, a remote processing means, whereby the vibration information generated by the at least two vibration sensor elements reaches the remote processing means by means of a measurement acquisition device that communicates with the sensors and has access to the internet network. The capture and display devices and the user interface can also connect to the processing means by accessing the internet network.

In a preferred embodiment of the invention, the at least two vibration sensors preferably communicate by means of a wireless network communication with the capability to exchange information in real time.

Knowing that the amplitude of the signals captured by at least two sensors may be insufficient to create an animated graphic virtual representation visible to the user, the invention can use the amplification of each measured point for better visualization of the animation.

In an embodiment of the invention, the devices for image capture, acquisition of vibration data measurement and display, and the user interface are integrated into a single piece of equipment.

### BRIEF DESCRIPTION OF THE DRAWINGS

This invention will be described in more detail below, with reference to the accompanying drawings, in which:
**Figure 1** - illustrates an example structure in which the method for generating an augmented reality representation of vibrational deformations according to the present invention is applied;
**Figure 2** **-** Schematically illustrates an augmented reality representation of vibrational deformations obtained according to the method of the present invention;
**Figure 3** - Schematically illustrates another augmented reality representation of vibrational deformations obtained according to the method of the present invention.

### DETAILED DESCRIPTION OF THE INVENTION

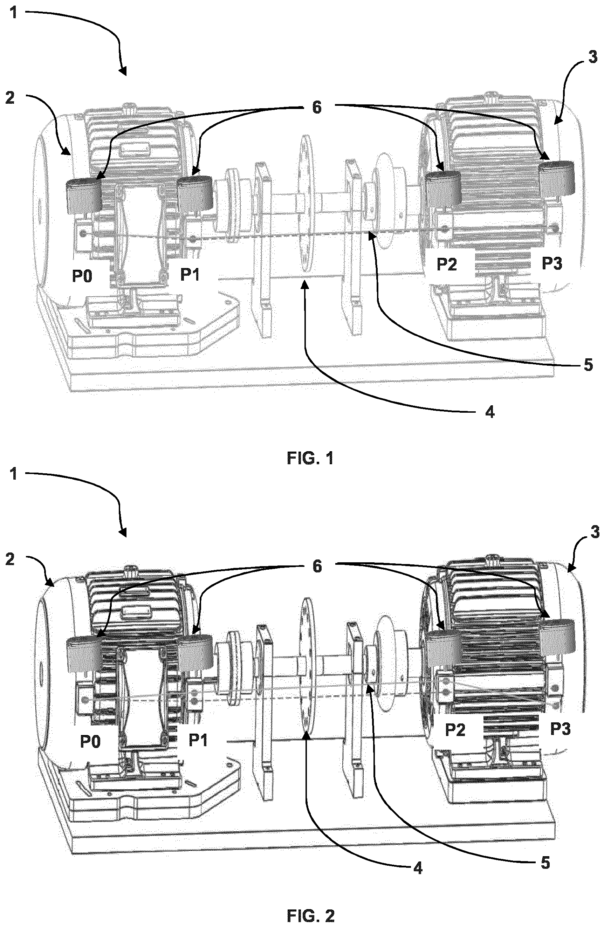

The method for generating an augmented reality representation of vibrational deformations for a structure according to the present invention will be described below based on an embodiment schematically illustrated in figures 1 to 3.

Figure 1 shows an example of structure 1 to which the method can be applied according to the present invention. In the illustrated example, structure 1 comprises two electric motors 2, 3 mechanically connected to each other, with a structural element 4 arranged between them. The sensors 6 are the devices responsible for measuring vibration. Naturally, a person skilled in the art will understand that structure 1 could be any structure - such as, for example, a piece of equipment or a set of equipment - that vibrates during its operation. Additionally, the position of the sensors does not interfere with the final result of the invention.

Excessive vibration of a structure can cause several inconveniences, from excessive noise to operational failures. The present invention proposes a method that makes it easier to visualize the vibration pattern and movements, allowing the visual perception of characteristics of vibratory deformations, such as intensity and direction.

The visualization in augmented reality, provided by the method of the present invention, allows even a lay user to have the proper perception of the vibratory deformations, enabling the user to identify the need for adjustments or maintenance in the analyzed equipment.

The method according to the present invention is based on the superimposition of a virtually created image onto a real image of the structure to be analyzed, captured by an image capture device. The image capture device can be of any known type, such as a photo camera, a video camera, a security camera, a smartphone or tablet with a camera, or any other type of image capture device, whether dedicated or not.

The method according to the present invention uses at least two vibration sensor elements that will be arranged in the structure. The vibration sensor elements can be of any suitable type. In an embodiment of the invention, the vibration sensor is part of the WEG Motor Scan^{®} monitoring device marketed by the company WEG Equipamentos Elétricos S.A.

The at least two vibration sensor elements are arranged in the structure to be analyzed. In the illustrative embodiment of figures 1 to 3, four vibration sensors 6 are arranged at points P0, P1, P2, and P3.

Thus, in an embodiment of the method of the present invention, the image capture is carried out after the sensors are arranged. However, it should be understood that, in alternative implementations, the sensor elements could be arranged after capturing the actual image of the structure.

After capturing the image, the user must indicate, in the captured image, the locations of the vibration sensor elements. This can be done by means of any suitable interface, such as a touchscreen of the image capture device itself, a separate interface of the image capture device, a computer, smartphone, or tablet.

The user-specified locations mark a reference point for the vibratory deformations and allow the creation of a reference graphic virtual representation.

It should be emphasized that the reference graphic representation is not necessarily a graphic representation of the structure to be analyzed, but an image that will allow the visualization of the characteristics of the vibratory deformations suffered by the structure.

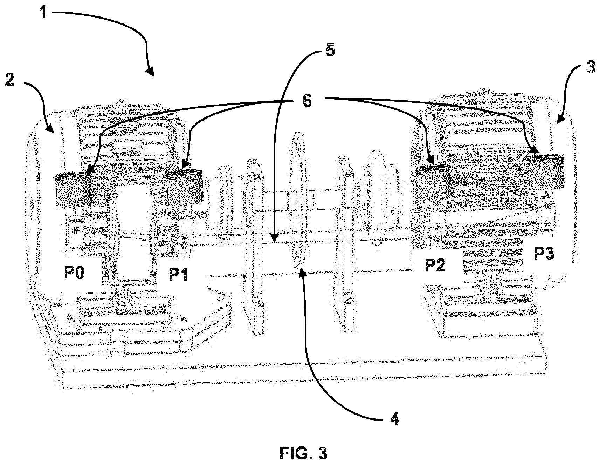

In the images shown in figures 2 and 3, this reference graphic virtual representation is formed by straight lines 5 that connect points P0, P1, P2, and P3. Thus, in the embodiment shown in the figures, the graphic representation is a 2D image, whose generation requires less computational effort. However, in alternative embodiments of the present invention, the graphic representation could be, for example, a three-dimensional image.

Vibration sensor elements are preferably, but not limited to, vibration measurement sensors that operate by electrical voltage variation proportional to the vibration. The measurements performed are used to animate the reference graphic virtual representation, generating an animated graphic virtual representation that will be superimposed on the captured image.

In an embodiment of the method of the present invention, the animation of the animated graphic virtual representation is generated by a displacement, relative to the reference graphic virtual representation, of the indicated points for the locations of the vibration sensors.

Thus, in the illustrative embodiment of figures 2 and 3, the animated graphic virtual representation is an animation wherein points P1 and P2 are displaced with greater amplitude, and points P0 and P3 practically do not move, as they have a proportionally much smaller vibratory displacement than at points P1 and P2, and, consequently, the lines connecting points P0 and P1, P1 and P2, and P2 and P3 move "carried" by the displacements of points P1 and P2.

In the preferred embodiment of the invention, the displacements of points P1, P2, P3, and P4 are proportional to the variations in electrical voltage measured by the vibration sensors at these points. These displacements are identified from the frequency of the vibratory movement. Once the frequency of this vibration is defined, it suffices to identify the peak, or the amplitude of this variation, and use it to animate the points. The frequency of the vibration is also a characteristic extracted from the electrical voltage data measured by the vibration sensors by the processing thereof in the data processing means. The relative direction (or phase) between the deformations measured at points P0, P1, P2, and P3 is also extracted from the data measured through processing in the data processing means. Extraction of the relative direction is possible because the measurements are taken at the same instant and are therefore synchronized. In this way, it is possible to know that point P1 is moving in the same direction as point P2 and vice versa.

Thus, in an embodiment of the present invention, the method comprises the step of synchronizing the sensors before the start of the measurements. This synchronization can be accomplished by connecting the sensors to each other so that the measurements are initiated substantially simultaneously.

It should be emphasized, however, that the measuring sensor elements do not measure the displacement of the structure itself during vibration. The displacement of the points mentioned earlier is a characteristic of the animation generated from the variation of electrical voltage measured in the sensors and not a characteristic of the displacement of the structure itself.

In the context of the present invention, the term "proportional" may indicate an amplified proportion, in which the displacements of the points are exaggerated in relation to the measures of electric voltage variation, so that the vibrational deformations in the animation can be better visualized and perceived by the user.

In an embodiment of the invention, the data from the vibration measurements are sent to the cloud, and the treatment and processing of the data for generating the reference graphic virtual representation and the animated graphic virtual representation are carried out remotely. However, other means of data processing may be used, such as, for example, processing means embedded in the equipment itself.

The forwarding of the data from the vibration measurements can be carried out via a measurement acquisition device.

The animated graphic virtual representation is superimposed on the captured image of the structure, and the resulting combined image is displayed in a display device.

The display device can be a dedicated device, for example, a monitor set up on the shop floor, or a multifunction device such as a smartphone, tablet, notebook, or computer.

The capture, indication, and display devices can be combined into a single device or separate devices. Such devices can communicate with the data processing means used to generate virtual images and also with the vibration sensor elements, with communication between devices preferably carried out wirelessly.

In a preferred embodiment of the method of the present invention, the image of the structure to be analyzed is a static image of the structure, such as, for example, a photograph or a single frame of a video image.

This is possible because the method according to the present invention dispenses with the need to capture more images, since the animated graphic virtual image does not depend on the captured image. In other words, in the method of this invention, there is no need to change the pixels of the captured image, on the contrary: the animated graphic virtual representation is superimposed on the captured image. This characteristic of the present invention reduces the computational processing capacity necessary for the application of the method, generating savings in resources and costs.

Another advantage achieved by the method of the present invention is the possibility of using real-time vibrational deformation data. In fact, since the method of the present invention uses monitoring devices (sensor elements) capable of monitoring the conditions of the equipment during its normal operation, there is no need to create forced impacts on the structure to measure vibrations. In addition, the sensor elements used by the present invention generate a discrete signal over time, proportional to the vibration, allowing such a signal to be captured by a device, for example, remote, and used, at the time when such a signal is needed, for the generation of the animated graphic virtual image.

Another extremely advantageous point of the method proposed by the present invention is the elimination of the need for the user to program or configure a specific device for the analysis of professional deformations. This occurs mainly due to two characteristics of the invention: the preferentially remote processing for the generation of the animated representation and the fact that the animated representation does not depend on the pixels of the captured image, that is, there is no need for graphic reproduction of the structure to be analyzed and, therefore, there is no need to create a specific three-dimensional model for the structure.

The present invention further contemplates a system for generating an augmented reality representation of vibrational deformations for a structure. The system, whose operation is based on the described method, uses image capture, data capture, image display, and user interface devices-which can be in the form of devices integrated into a single piece of equipment or as separate devices - vibration sensor elements, and a processing medium capable of connecting to the devices.

Having described an example of an embodiment of the present invention, it should be understood that the scope of the present invention encompasses other possible variations of the inventive concept described, being limited only by the content of the appended claims, including possible equivalents.

## Claims

1. Method for generating an augmented reality representation of vibrational deformations for a structure, **characterized by** the fact that it comprises:
arranging at least two vibration sensor elements in different locations of the structure;
capturing an image of the structure, before or after the step of arranging the at least two vibration sensor elements;
indicating, in the captured image, the locations of the at least two vibration sensor elements;
generating a reference graphic virtual representation from the locations indicated for the at least two vibration sensor elements;
performing at least two vibration measurements by the vibration sensors;
animating the reference graphic virtual representation to reflect the vibration measurements taken, generating an animated graphic virtual representation;
superimposing the animated graphic virtual representation on the captured image of the structure, generating a combined image;
displaying the combined image.

2. Method, according to claim 1, **characterized by** the fact that it comprises, before the step of performing at least two vibration measurements by the vibration sensors, the synchronization of at least two vibration sensor elements.

3. Method, according to claim 1 or 2, **characterized by** the fact that the image captured is one of a static image of the structure and a video image of the structure.

4. Method according to any of claims 1 to 3, **characterized in that** the reference graphic representation is a 2D representation.

5. Method, according to any of claims 1 to 4, **characterized by** the fact that the step of indicating, in the captured image, the locations of the at least two vibration sensor elements is performed in an interface device.

6. Method, according to any of claims 1 to 5, **characterized by** the fact that the at least two vibration sensor elements comprise vibration sensors that perform the measurement by variation of electrical voltage.

7. System for generating an augmented reality representation of vibrational deformations for a structure, **characterized by** the fact that it comprises:
at least two vibration sensor elements arranged in different locations of the structure;
an image capture device to capture an image of the structure;
a user interface that receives indications of the locations of the at least two vibration sensor elements;
processing means to receive the data measured by the vibration sensor elements and data from the indications of the locations of the at least two vibration sensor elements and to create a reference graphic virtual representation from the data received;
wherein the processing means generate an animated graphic virtual representation that reflects the vibration measurements performed by the vibration sensor elements and superimposes the animated graphic virtual representation on the captured image of the structure to create a combined image; and
a display device to display the combined image.

8. System, according to claim 7, **characterized by** the fact that the measurements performed by the at least two vibration sensor elements are extracted by a measurement acquisition device that connects to the processing medium via an internet network.

9. System, according to claim 8, **characterized by** the fact that the capture and display devices and the user interface connect to the processing means over a wireless network.

10. System, according to any of claims 8 or 9, **characterized by** the fact that the image capture, measurement acquisition and display devices, and the user interface are integrated into a single piece of equipment.
